# EUROPÄISCHE PATENTSCHRIFT

(11) **EP 3 650 825 B1**
(45) Veröffentlichungstag und Bekanntmachung des Hinweises auf die Patenterteilung: **03.11.2021**
(21) Anmeldenummer: 18205415.5
(22) Anmeldetag: 09.11.2018
(51) Int. Cl.: G01L 5/24, G01L 1/22, G01L 5/16

(54) **BETRIEBSKRAFTMESSUNG BEI EINEM MECHANISCHEN BAUELEMENT**
OPERATIONAL FORCE MEASUREMENT OF A MECHANICAL COMPONENT
MESURE DE LA FORCE OPERATIONNELLE D'UNE COMPOSANTE MECANIQUE

(43) Veröffentlichungstag der Anmeldung: 13.05.2020
(73) Patentinhaber: CiS Forschungsinstitut für Mikrosensorik GmbH, 99099 Erfurt (DE)
(72) Erfinder: Frank, Thomas, 98693 Illmenau (DE)
(74) Vertreter: Patentanwälte Geyer, Fehners & Partner mbB

(56) Entgegenhaltungen:
- EP-A2- 0 987 532
- US-A- 4 079 624

## Beschreibung

Die Erfindung bezieht sich auf die Betriebskraftmessung bei einem mechanischen Bauelement, wobei ein Dehnungsmesssensor, der mindestens einen in einer Ebene angeordnete Dehnungsmessstreifen (DMS) mit einer Piezokoeffizientenachse umfasst, zum Einsatz kommt, um die Kraft senkrecht zur Ebene zu erfassen und auf einer Montagefläche ein entlang seiner Längsseiten freigestellter, länglicher Steg angeordnet ist, der sich parallel zu der Ebene erstreckt, und der Dehnungsmesssensor fest mit dem Steg verbunden ist.

Eine solche Betriebskraftmessung ist aus der EP-A-0987532 bekannt. Dort werden Foliendehnmesstreifen eingesetzt, um eine Torsionskraft in einem Bolzen o.ä. zu messen. Die Foliendehnmesstreifen liegen in einem durch zwei parallele Längsschlitze begrenzten Feld. Es werden im Feld zwei Gruppen von Foliendehnmesstreifen gebildet. Innerhalb jeder Gruppe liegen die Foliendehnmesstreifen parallel zueinander und die Gruppen liegen rechtwinklig zueinander und jeweils im 45°-Winkel zu den beiden Längsschlitzen. Eine ähnliche Kraftmessung findet sich in der US-A-4079624.

Mechanische Bauelemente werden häufig mit einer Kraft beaufschlagt, deren Hauptrichtung senkrecht zu einer Ebene steht, die aber insgesamt gegenüber der Ebene verkippt sein kann. Ein besonderes eingängiges Beispiel hierfür sind Maschinenelemente und hier insbesondere Schrauben. Der Belastungszustand einer Schraube ist durch die Vorspannkraft, mit der der Schraubenkopf auf die Unterlage drückt, und die betriebszustandsabhängige Betriebskraft charakterisiert. Die Hauptrichtung der sich in Summe ergebenden Kraft verläuft senkrecht zu einer Ebene, zu der die Schraubenbolzenachse senkrecht steht. Dies kann in einem sogenannten Verspannungsschaubild dargestellt werden. Das Schaubild berücksichtigt nur eine eindimensionale Belastung der Verbindung längs der Hauptrichtung. Zur Dimensionierung wird ebenfalls diese Art der Betrachtung herangezogen. Bei regelgerechter Belastung der Schraube, also bei Belastung ausschließlich entlang der Hauptrichtung, d.h. Längsrichtung des Schraubenbolzens, ist diese Dimensionierung auch sehr zuverlässig. Ein Versagen der Verbindung tritt oft dann auf, wenn die Schraube nicht mehr ausschließlich in der Hauptrichtung belastet wird und damit der aktuelle Betriebszustand von den Bedingungen abweicht, welche für die Auslegung maßgeblich waren. Eine Ursache für eine nicht-auslegungsgemäße Belastung ist oft Überlast oder der Verlust einiger Schrauben eines Verbundes.

Es stellt sich in diesem Fall die Problematik, eine Kraftmessung auszuführen, welche an einem mechanischen Bauelement mind. eine von der Hauptrichtung abweichende Kraftkomponente erfasst. Eine Schraube steht natürlich nur exemplarisch für ein mechanisches Bauelement, bei dem sich diese Frage stellt. Ein ganz anderes Gebiet wäre z.B. die Überwachung eines Bauwerkträgers.

Je nach Applikationsgebiet kann das mechanische Bauelement nur sehr schwer erreichbar sein. Ein Beispiel sind Maschinenelemente bei Windkraftrotoren, die ersichtlich nur mit erheblichem Aufwand zugänglich sind.

Die mind. eine von der Hauptrichtung abweichende Kraftkomponente erzeugt eine zweidimensionale Spannungsverteilung in der zur Hauptrichtung senkrechten Ebene. Es wurde deshalb überlegt, zur Messung einen Dehnungsmesssensor in einer ebenen Montagefläche anzuordnen, die parallel zur Ebene liegt. Durch die wirkende Kraft verformt sich die Montagefläche. Dies führt zu einem zweidimensionalen Spannungsfeld in der Montagefläche.

Bekannt für solche Dehnungsmesssensoren sind Silizium-DMS, die im Dehnungsmesssensor als Vollbrücke, Halbbrücke oder Viertelbrücke angeordnet sind. Sie sind kleiner und sensitiver als konventionelle Metall-Folien-DMS. Besonders vorteilhaft ist es, eine Vollbrücke aus vier in quadratischer Form liegende Si-Messwiderständen in einen Chip zu integrieren. Dieser Dehnungsmesssensor besitzt beispielweise eine Fläche von 0,25 mm² und eine Dicke von 0,015 mm. Durch die Wirkung der piezoresistiven Konstanten für die Längsbelastung und die Querbelastung ergibt sich bei vier rechtwinklig zueinander angeordneten Messwiderständen eine Vollbrücke. In einem einachsigen Spannungszustand werden zwei Widerstände vergrößert und zwei vermindert. Zur Messung der Verformung der Oberfläche infolge der Vorspannkraft, bzw. der Betriebskraft, ist deshalb eine Position des Dehnungsmesssensors notwendig, an der in der Montagefläche eine möglichst große Differenz zwischen der mechanischen Spannung in x-und y-Richtung vorliegt. Der Dehnungsmesssensor muss damit dann ganz präzise auf der Montagefläche, z.B. einem Schraubenkopf, positioniert werden, da er in der Stelle der maximalen lateral anisotropen Verformung liegen muss. Ansonsten würden Querspannungen wirken, die das Signal verfälschen und unbrauchbar machen würden.

Die optimale Positionierung ist nur aufwendig, z.B. durch Simulationen, zu ermitteln. Sie hängt sowohl von der Richtung der zu messenden Kraftkomponente als auch von der Geometrie des mechanischen Bauelements ab. Diese Stelle liegt beim Beispielfall der Schraube in der Regel in einer Zone der Oberfläche, die über der Bolzenkante des Schraubenbolzens angeordnet ist. Die Positionierung ist deshalb hiervon der Schraubenkopfgröße abhängig. Je nach Abmessung und Ausgestaltung des mechanischen Bauelements, z.B. Maschinenelement, und der Richtung der zu messenden Kraftkomponente ist damit eine andere Position des Dehnungsmesssensors erforderlich. Die dadurch nötige hochpräzise Ausrichtung des Dehnungsmesssensors erhöht den Fertigungsaufwand beträchtlich und macht darüber hinaus eine Nachrüstung an bereits im Einsatz befindlichen mechanischen Bauelementen, z.B. Maschinenelementen wie Schrauben, unmöglich. Letzteres gilt auch für eine Kraftmessung durch Zwischenlegen eines Druckmesskörpers, wie es z.B. in der DE 69311479 T2 oder der DE 10217283 A1 beschrieben ist.

Der Erfindung liegt deshalb die Aufgabe zugrunde, die Kraftmessung an einem mechanischen Bauelement, z.B. einem Maschinenelement wie einer Schraube, so auszugestalten, dass die Genauigkeit, mit der der Dehnungsmesssensor positioniert werden muss, reduziert ist und zugleich auch eine Nachrüstung an bereits im Einsatz befindlichen Elemente möglich wird. Dabei strebt man eine Lösung an, die möglichst universell verwendet werden kann.

Die Erfindung ist in den unabhängigen Ansprüchen 1, 9 und 13 gekennzeichnet. Die abhängigen Ansprüche betreffen bevorzugte Weiterbildungen der Erfindung.

Die Erfindung stellt zum einen ein mechanisches Bauelement, z.B. ein Maschinenelement, bereit, das zur Messung einer Betriebskraft ausgebildet ist. An einer Montagefläche des mechanischen Bauelements ist ein längserstreckter und entlang seiner Längsseiten freigestellter Steg angeordnet. Der Steg hat somit eine durch die Längsseiten definierte Längsrichtung. Die Steghöhe beträgt optional mindestens 100 µm und die Stegbreite optional maximal 2 mm. Der Steg liegt in einer Ebene, die die Ebene des zweidimensionalen Spannungsfelds festlegt. I.d.R. erstreckt sich die Montagefläche auch längs dieser Ebene.

Auf dem Steg ist ein Dehnungsmesssensor befestigt, der mind. zwei brückenverschaltete Si-Dehnungsmesstreifen (DMS) umfasst. Die Befestigung kann durch Kleben oder Löten erfolgen; grundsätzlich sind stoffschlüssige Verbindungstechniken bevorzugt. Kraftschlüssige Verbindungstechnik ist optional möglich. Bei der Verwendung von zwei rechtwinklig zueinander angeordneten DMS liegt eine Halbbrücke und bei vierin quadratischer Form vorgesehenen DMS eine Vollbrücke vor. Jeder DMS hat zwei zueinander rechtwinklig liegende Koeffizientenachsen, auf der ein Koeffizient eines piezoresistiven Effekts ein lokales Betragsmaximum hat. Die Koeffizienten der beiden Achsen unterscheiden sich im Vorzeichen und u.U. im Betragsmaximum. Die Achse mit positivem Piezokoeffizienten wird gemeinhin als Längsachse bezeichnet, die andere als Querachse. Der Dehnungsmesssensors ist zum Steg so ausgerichtet, dass die Koeffizientenachse (bzw. eine der beiden Achsen) parallel zur der Längsrichtung des Stegs liegt. Eine Piezokoeffizientenachsen liegt eine parallel der Stegrichtung, die andere quer dazu. Bei der Halb- oder Vollbrücke liegt die eine Hälfte der DMS liegt mit ihrer Längsachse parallel zur Längsrichtung, die andere mit ihrer Querachse.

Da der Steg seitlich freigestellt ist, also an seinen Längsseiten in Querrichtung zum Steg mit umgebendem Material nicht verbunden ist, erfasst der Dehnungsmesssensor nur Dehnungen längs der Steglängsrichtung. Die durch Orientierung der Längsrichtung und Lage der Ebene definierte dreidimensionale Ausrichtung des Steges filtert die Spannungsrichtung, welche vom Dehnungsmesssensor erfasst wird, der sich auf dem Steg befindet. Der Steg hat die Wirkung, dass er an der Montagefläche aus einer zweidimensionalen Spannungsverteilung eine Richtung extrahiert. Seine dreidimensionale Ausrichtung legt damit die Richtung der zu messenden Kraftkomponente fest. Verwendet man mehrere Stege, lässt sich die herausragende Funktion bekannter Messbrücken auch bei der Verwendung einzelner DMS beibehalten.

Die bei üblichen Si-basierten Dehnungsmesssensoren vorhandene Querempfindlichkeit (d.h. die andere Piezokoeffizientenachse) liegt quer zur Steglängsrichtung und führt deshalb zu keinem Signal in störendem Umfang. Auch in einem homogenen (isotropen) Spannungsfeld, d.h. bei gleicher mechanischer Spannung in Richtung x und y, erhält man so ein Messsignal, das sich nur auf die Spannung in Steglängsrichtung bezieht. Auf diese Weise ist die genaue Positionierung am mechanischen Bauelement unkritisch. Es muss nicht darauf geachtet werden, eine exakte Positionierung an einem Ort vorzunehmen, an dem keine Querspannungen auftreten; d. h. der Dehnungsmesssensor muss nicht mehr in einen Bereich gebracht werden, in dem eine Dehnung möglichst nur in einer Richtung und nicht quer dazu auftritt. Die Auswahl der Richtung, entlang der die Dehnung und damit die Verformung gemessen wird, wird ausschließlich durch die Ebene und Längsrichtung des Stegs festgelegt und ist damit positionierungsunabhängig. Die Ebene wird bevorzugt senkrecht zur Hauptrichtung der zu messenden Betriebskraft ausgerichtet.

Wie der Steg freigestellt ist, ist nicht weiter relevant. Unter einem freigestellten Steg wird hier ein längserstrecktes, in der Regel quaderförmiges Materialvolumen verstanden, dessen Längskanten nicht mit benachbartem Material verbunden sind. Eine Steghöhe von 100 µm genügt für die Unterdrückung von Dehnungen quer zur Steglängsrichtung bereits. Besonders bevorzugt ist ein Dickenbereich von 100-500 µm, ganz besonders bevorzugt ein Dickenbereich von 200-300 µm. Die Steglänge liegt bevorzugt bei mind. 1 cm. Werte über 2 cm sind meist nicht erforderlich. Das Aspektverhältnis (Länge/Breite) liegt bevorzugt bei mind. 2 oder 5 oder 10 oder 20.

Der Steg kann als quaderförmiger Volumenbereich ausgebildet sein, der mit der Montagefläche, z.B. einer Oberseite des Maschinenelementes fest verbunden ist. Z.B. ist es möglich, den Steg am mechanischen Bauelement herauszuarbeiten, so dass er integral mit diesem verbunden ist. Hierzu kommen z.B. Längsschlitze in der Montagefläche, wobei die Tiefe der Längsschlitze die Steghöhe definiert, eine Prägung oder eine spanenden Bearbeitung in Frage. Gleichermaßen und besonders bevorzugt ist es möglich, eine Montageplatte einzusetzen, welche den Steg aufweist. Dies kann dadurch erfolgen, indem in die genannten Längsschlitze in Montageplatte eingebracht werden. Diese Schlitze können als Einschnitte in die Montageplatte hineinreichen. Natürlich ist es auch möglich, dass die Längsschlitze als Durchgangsschnitte in die Montageplatte eingebracht werden. Alternativ ist die Montageplatte bereits stegförmig. Der Dehnungsmesssensor wird mit der Montageplatte durch ein Fügeverfahren fest verbunden, beispielsweise unter Verwendung eines Lots. Die Montageplatte wird ihrerseits mit der Montagefläche fest verbunden.

Für die Montageplatte kommt als Material insbesondere Federstahl oder eine Kupferlegierung in Frage. Letztere erlaubt es besonders einfach, die Montageplatte mit der Montagefläche zu verlöten. Grundsätzlich kann die Montageplatte auch aufgeklebt werden.

Die Verwendung einer Montageplatte eröffnet einen weiteren Aspekt der Erfindung, nämlich eine Messvorrichtung vorzusehen, mit der bereits verbaute mechanische Bauelemente nachgerüstet werden oder Standardbauteile hinsichtlich einer Messung der Betriebskraft aufgerüstet werden. Die einzige Anforderung ist dabei lediglich, dass eine geeignete Montagefläche vorhanden ist, die sich längs der erwähnten Ebene erstreckt.t. Die exakte Lage des Montageortes spielt hingegen keine oder nur eine sehr untergeordnete Rolle, da anders als bei einer direkten Platzierung des Dehnungsmesssensors durch die richtungsfilternder Wirkung des Steges auf/in der Montageplatte eine sehr große Unempfindlichkeit hinsichtlich der Montageposition gegeben ist. Der Steg sorgt automatisch für die erforderliche x/y-Anisotropie, d. h. für die Messung der Dehnung ausschließlich entlang der Längsrichtung des Steges.

Erfindungsgemäß ist weiter ein Verfahren zur Messung einer Betriebskraft bei einem mechanischen Bauelement vorgesehen. Analog zum erläuterten mechanische Bauelement und zur erläuterten Messvorrichtung, wird an einer Montagefläche des mechanische Bauelements ein längserstreckter und entlang seiner Längsseiten freigestellter Steg vorgesehen, der Stegabmessungen in den genannten Größenordnungen hat und auf dem der Dehnungsmesssensor kraftschlüssig in der bereits genannten Ausrichtung befestigt wird. Hinsichtlich der Verbindungstechnik gilt das zuvor gesagte. Mit einem derartigen Verfahren kann auch eine Messung an einem bereits verbauten mechanischen Bauelement durchgeführt werden. Es wird eine Montageplatte bereitgestellt, welche die genannten Eigenschaften und den genannten Dehnungsmesssensor hat. Die Montageplatte wird mit der Montagefläche verbunden, z.B. kraft- oder stoffschlüssig (gelötet oder geklebt).

Das Verfahren und das mechanische Bauelement sowie die Messvorrichtung erlauben es, die Betriebskraft aktuell zu messen. So kann z.B. eine Vorspannkraft erfasst werden. Auf diese Weise lässt sich eine Fehlbelastung oder gar Versagen eines mechanischen Bauelements, z.B. ein Losrütteln einer Schraube frühzeitig erkennen.

Für eine mehrdimensionale Krafterfassung ist es vorgesehen, mindestens zwei Dehnungsmessstreifen auf Stegen vorzusehen, die in einem Winkel zueinander liegen, bevorzugt im 90°--Winkel.

Das erfindungsgemäße Konzept hat den Vorteil, dass kein Eingriff in den Kraftfluss eines mechanischen Bauelements genommen werden muss. Genaue Kenntnis über den Kraft- oder Spannungsverlauf ist nicht mehr nötig, um eine Betriebskraft in bestimmter Richtung zu messen. Die verwendeten Befestigungsmethoden können langzeitstabile Fügeverfahren, wie Glasfritten oder Metalllote einsetzen. Die Montage ist einfach und die Ausführung robust. Ganz besonders bevorzugt ist es, dass ein einziger Sensor für verschiedenste mechanische Bauelemente verwendet werden kann. Das mechanische Bauelement, z.B. eine Schraubenverbindung kann lebenslang überwacht werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Sie beziehen sich rein exemplarisch auf eine Schraube als mechanisches Bauelement. Weiter ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine Schemadarstellung einer Schraube mit einem Schraubenkopf zur Erläuterung eines nicht-axialen Belastungszustandes der Schraube,
- Fig. 2: eine Erläuterung der Spannungsverhältnisse beim Betrieb der Schraube der Fig. 1 in einer Schraubenverbindung mit wechselnder Richtung der belastenden Kraft,
- Fig. 3: eine schematische Draufsicht auf den Schraubenkopf mit einer Messvorrichtung zum Messen der Spannungsverhältnisse in der Schraube,
- Fig. 4: eine Schnittdarstellung entlang der Linie A-A der Fig. 3,
- Fig. 5: eine Schnittdarstellung ähnlich der Fig. 4 für eine alternative Ausführungsform der Spannungsmessung, bei der Teile der Messvorrichtung durch den Schraubenkopf ausgebildet sind,
- Fig. 6 eine: schematische Perspektivdarstellung einer Schraube gemäß der Ausführungsform der Fig. 5,
- Fig. 7 eine: Perspektivdarstellung einer Schraube mit einer gegenüber den Fig. 3 und 4 abgewandelten Messvorrichtung,
- Fig. 8 eine: Schemadarstellung eines Elementes zur Messung der Spannungsverhältnisse, die sich durch eine Kraft ergeben, welche längs einer z-Achse wirkt, die in Fig. 8 eingetragen ist,
- Fig. 9: eine Schnittdarstellung des Elementes der Fig. 8,
- Fig. 10: eine Schnittdarstellung ähnlich der Fig. 9 für ein abgewandeltes Element,
- Fig. 11: mechanische Spannungen im Element der Fig. 8, 9 oder 10 verglichen mit mechanischen Spannungen eines Elementes,
- Fig. 12A-12C: verschiedene Ausgestaltungen eines Chips als Dehnungsmesssensor mit Dehnungsmesstreifen in Vollbrücke (Fig. 12A), Halbbrücke (Fig. 12B) und Viertelbrücke (Fig. 12C) und
- Fig. 13: eine kreuzförmige Anordnung aus zwei Stegen mit vier Dehnungsmessstreifen in Vollbrückenverschaltung.

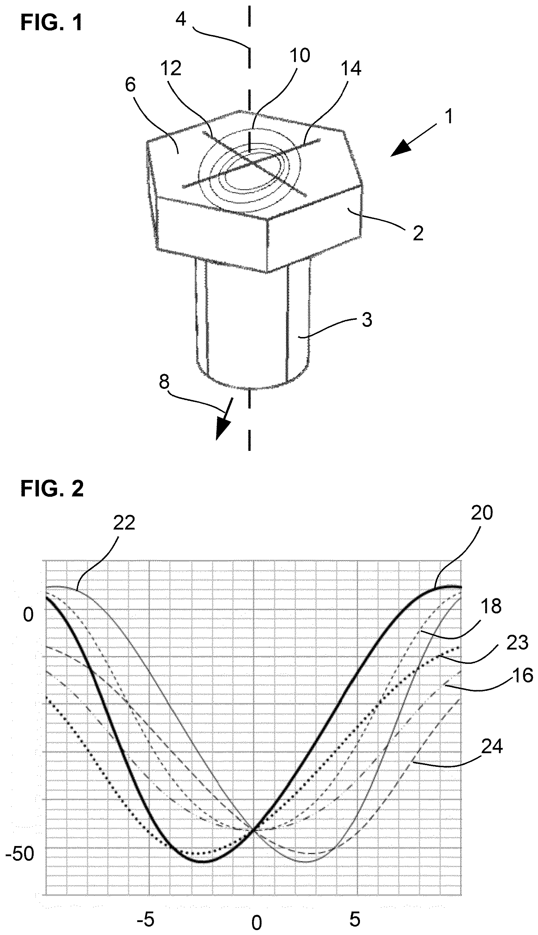

Fig. 1 zeigt schematisch eine Schraube 1 mit einem Schraubenkopf 2 und einem Schraubenbolzen 3. Der Schraubenbolzen 3 erstreckt sich längs einer Bolzenachse 4, die senkrecht zu einer Oberseite 6 sowie einer dazu parallelen, in der perspektivischen Darstellung der Fig. 1 nicht erscheinenden Unterseite des Schraubenkopfs 2 liegt. Wie bereits erläutert, geht die Auslegung einer Schraubenverbindung von einer Kraftbelastung auf die Schaube 1 aus, die ausschließlich längs der Bolzenachse 4 verläuft. Im vorliegenden Fall ist die Schraube jedoch in einer Kraftrichtung 8 belastet, die schräg zur Bolzenachse 4 verläuft. Zusätzlich zu einer axialen Komponente, z. B. der Vorspannkraft, welche die Hauptkraftrichtung ist, gibt es auch noch eine Querkraft. Die Hauptkraftrichtung verläuft senkrecht zu einer Ebene, die wiederum rechtwinklig zur Bolzenachse 4 steht. Auf diese Weise entsteht im Schraubenkopf 2 in der Ebene eine Spannungsverteilung 10, symbolisiert durch Höhenlinien gleicher Spannung, die asymmetrisch zu aufeinander senkrecht stehenden Hauptachsen 12, 14 verläuft, welche ein x/y-Koordinatensystem der Ebene Schraubenkopfs 2 aufspannen. Bei einer Belastung ausschließlich längs der Bolzenachse 4 wäre die Spannungsverteilung 10 vollständig symmetrisch sowohl zur x-Hauptachse 12 als auch zur y-Hauptachse 14.

Fig. 2 zeigt einen Schnitt durch die Spannungsverteilung 10, die hier in einer Ebene dargestellt ist, welche senkrecht zur Bolzenachse steht und an der Oberfläche des Schraubenkopfs positioniert ist. Die Spannung in MPa ist auf der Hochachse und die laterale Koordinate auf der Querachse aufgetragen. Der Nullwert der lateralen Koordinate entspricht der Lage der Bolzenachse 4. Der Nullwert der Spannung entspricht einem spannungsfreien Zustand ohne Durchbiegung der Oberseite 6. Negative Spannungswerte zeigen an, dass die Spannung in der Darstellung der Fig. 1 nach unten wirkt, also den Schraubenkopf 2 in eine Verformung beaufschlägt, die eine Eintiefung auf der Oberseite 6 zur Folge hat.

Fig. 2 zeigt verschiedene Kurven, die verschiedenen Spannungszuständen entsprechen. Die Kurven beziehen sich dabei auf den Spannungsverlauf entlang der x-Hauptachse 12. Die in der Darstellung der Fig. 2 betrachtete Schraube 1 ist mit einer Vorspannkraft längs der Bolzenachse 4 beaufschlagt. Einigen Kurven zeigen einen Zustand, in dem zusätzlich eine parallel zur Ebene gerichtete Querkraft an der Unterseite des Bolzens 3 angreift.

Keine Querkraft liegt in den Kurven 16 und 18 vor, welche die Komponenten der mechanischen Spannung in Richtung x und y (Sigma(x), Sigma(y)) zeigen. Wie zu sehen ist, ist der Spannungsverlauf völlig symmetrisch zur Bolzenachse 4, die dem Nullwert auf der Querachse entspricht.

Die Kurven 24 und 22 zeigen das Angreifen einer Kraft von 10% der Vorspannkraft, wobei die Kurve 22 die x-Komponente und die Kurve 24 die y-Komponente der mechanischen Spannung zeigen. Die Kurven 23 und 24 zeigen das Angreifen einer Kraft von 10% der Vorspannkraft hin zur positiven y-Richtung.

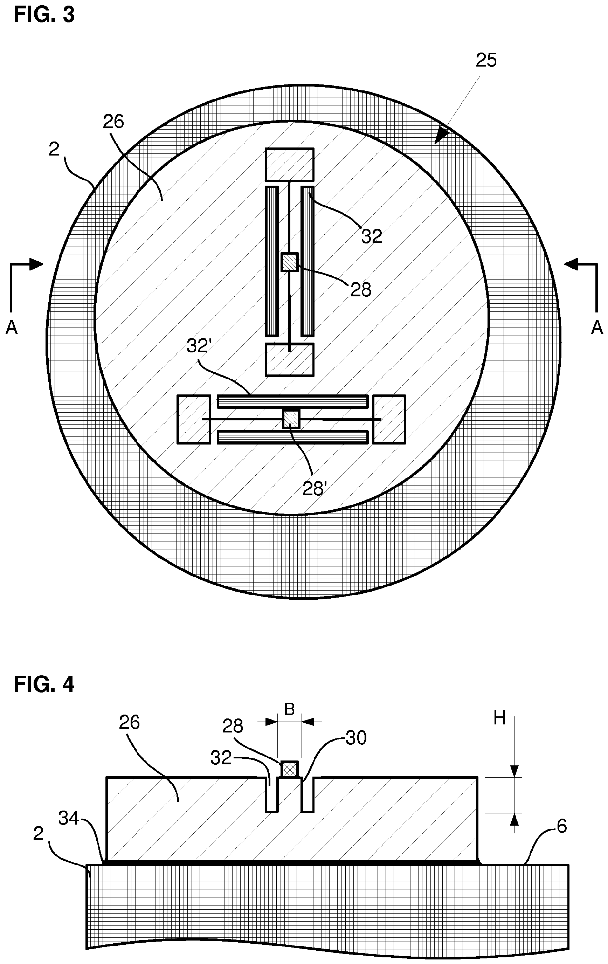

Um diese Spannungszustände messen zu können, ist für die Schraube 1 eine Messvorrichtung 25 vorgesehen, die in Fig. 3 in einer Ausführungsform in Draufsicht auf den Schraubenkopf 2 und in Fig. 4 in einer Schnittdarstellung entlang der Linie A-A der Fig. 3 gezeigt ist.

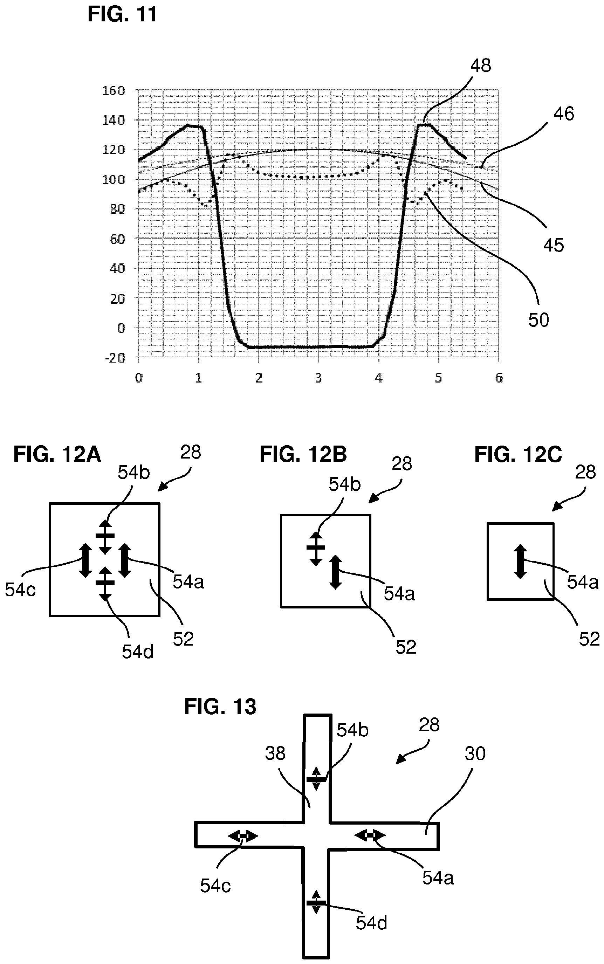

In dieser Ausführungsform umfasst die Messvorrichtung 25 eine Montageplatte 26, welche auf die als Montagefläche dienende Oberseite 6 des Schraubenkopfs 2 fest aufgebracht ist. Die Montageplatte 26 hat einen Dehnungsmesssensor 28, mit mind. zwei DMS, bevorzugt vier als Vollbrücke angeordneten DMS (wie oben beschrieben). Der Einzelwiderstand/die Einzelwiderstände ist/sind über nicht weiter bezeichnete Kontaktpads elektrisch kontaktiert. Details der möglichen Anordnungen werden anhand der Fig. 12-13 noch erläutert.

Jeder Dehnungsmesssensor 28 befindet sich auf einem Steg 30, der durch Einschnitte 32 oder (nicht gezeigte) Durchtrennungsschnitte vom restlichen Material der Montageplatte 26 so abgegrenzt wird, dass der Steg an seinen Längsseiten freigestellt ist. Die Einschnitte 32 oder Durchtrennungsschnitte werden hier unter dem Begriff "Längsschnitte" zusammengefasst. Sie haben die Wirkung, dass eine Spannung, die quer zur Längserstreckung des Steges 30, die hier als Längsrichtung bezeichnet wird, wirkt, zwar das Material der Montageplatte 26 unter Spannung setzt und ggf. verformt, nicht jedoch den Steg 30 quer zur seiner Längserstreckung. Die Längsrichtung des Steges und die Ebene, in der die Montagefläche liegt, legen die dreidimensionale Richtung des Steges fest. Sie definieren damit zugleich eine Filterrichtung, denn nur in dieser dreidimensionale Richtung misst der auf dem Steg fest montierte Dehnungsmesssensor 28 Spannungen. Fig. 3 zeigt zwei Dehnungsmesssensoren 28, 28' auf rechtwinklig zueinander liegenden Stegen 30, 30'. Sie messen demnach auch die Dehnung entlang rechtwinklig zueinander liegenden Längsrichtungen. Diese Zweiachsigkeit ist optional.

Jeder Si-DMS ist ein Einzelwiderstand, der zwei piezoresistive Koeffizientenachsen aufweist, entlang der der Koeffizient des piezoresistiven Effekts im Betrag ein lokales Maximum hat; die Si-DMS haben zwei zueinander rechtwinklig liegende Koeffizientenachsen. Sie werden üblicherweise als Längs- und Querachsen bezeichnet, wobei der Koeffizient in Längsachse positiv, in Querachse negativ ist. In der Halb- oder Viertelbrücke sind die Si-DMS so angeordnet, dass für jeden Einzelwiderstand eine der zwei Koeffizientenachsen entlang der Längsrichtung liegt. Die bei Dehnungsmessstreifen i.d.R. vorhandene Querempfindlichkeit (d.h. die senkrecht zur Längsrichtung liegende Koeffizientenachse) spielt keine Rolle mehr und führt nicht zu einem Signal.

Die dreidimensionale Richtung des (bzw. jedes) Steges 30 selektiert damit die Richtung, entlang der der Dehnungsmesssensor 28 die Spannung in der Montageplatte 26 und, da diese fest mit der Oberseite 6 des Schraubenkopfes 2 verbunden ist, auch im Schraubenkopf 2 misst. Es ist nicht mehr relevant, ob der Dehnungsmesssensor exakt auf der Bolzenachse 4 liegt. Unterschiedliche Spannungsverläufe, die, wie Fig. 2 zeigt, hinsichtlich x-Richtung und y-Richtung zur selben Spannungskurve führen könnten, werden klar separiert. Damit ist es auch einfach möglich, den Richtungsvektor der auf die Schraube wirkenden Betriebskraft zu ermitteln, wenn mindestens zwei Stege 30, 30', die sich nicht in derselben Längsrichtung erstrecken, und Dehnungsmesssensoren 28, 28' verwendet werden.

Auch ist es nicht erforderlich, dass die Dehnungsmesssensoren 28 an Stellen auf dem Schraubenkopf 2 angeordnet sind, an denen sich aufgrund des Spannungsbildes eine Anisotropie in x-bzw. y-Richtung einstellen würde. Die Filterung der Richtung wird durch die Ausbildung des Steges 30 erreicht; die dreidimensionale Richtung des Steges legt die hinsichtlich der Spannungsmessung gefilterte Richtung fest. Eine individuelle Anpassung der Lage der Dehnungsmesssensor auf den Schraubenkopf 2 ist nicht mehr erforderlich. Auf diese Weise kann mit einer einheitlichen und standardisierten Messvorrichtung 25 bei unterschiedlichen Geometrien zuverlässig die Betriebskraft in einer genau festgelegten und einfach zu wählenden Richtung gemessen werden. Auch erlaubt die drastisch reduzierte Justieranforderung es, die Vorrichtung 25 an Schraubenköpfen nachzurüsten, die bereits verbaut sind.

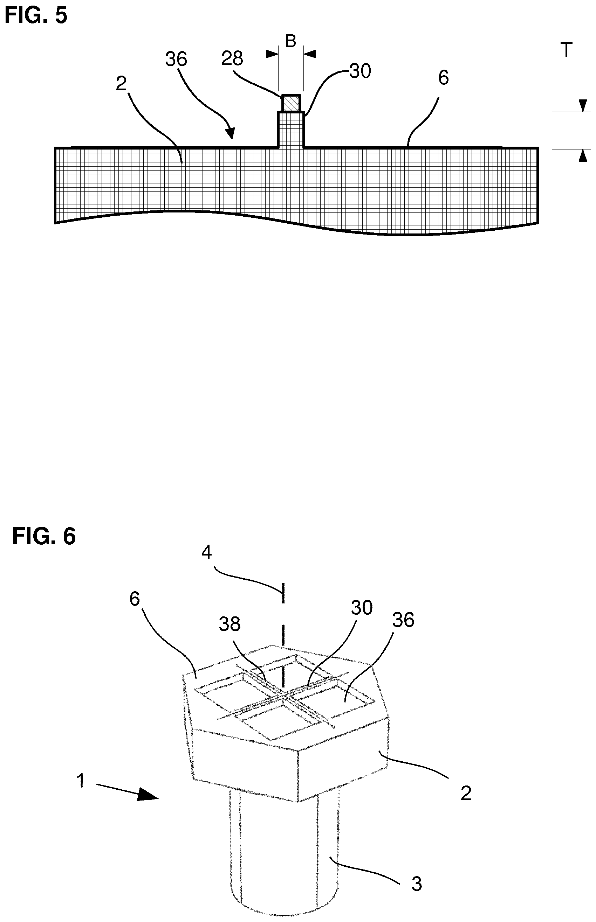

Wesentlich für die Wirkung der Ausführungsform der Fig. 3 und 4 ist der an seinen Längsseiten freigestellte Steg 30. Er muss nicht zwingend mittels einer Montageplatte 26 bereitgestellt werden, sondern kann auch durch geeignete Ausbildung der Montagefläche realisiert sein. Dies zeigt exemplarisch Fig. 5, die ebenfalls eine Schnittdarstellung ähnlich der Fig. 4 ist. Fig. 6 zeigt schematisch dazu eine perspektivische Ansicht der zugehörigen Schraube 1. Durch Eintiefungen 36, die beispielsweise durch ein Prägen oder Abfräsen der Oberseite 6 des Schraubenkopfes 2 erzeugt werden können, wird an der Oberseite mindestens ein freistehender Steg 30 erzeugt, auf dem dann der Dehnungsmesssensor 28 befestigt wird. Alternativ würden auch Längsschlitze in der Schraubenkopfoberseite den Steg 30 ausbilden, der dann ebenfalls im mechanischen Sinne freisteht. Fig. 6 zeigt zwei Stege in einer kreuzförmigen Konfiguration, d. h. der Steg 30 wird von einem weiteren Steg 38 gekreuzt, z. B. unter 90°. Die gekreuzten Längsrichtungen erlauben es, x- und y-Richtungen klar zu selektieren. Darüber hinaus kann in dem kreuzförmigen Aufbau auf jedem Steg 30 ein DMS auf der einen Seite der Bolzenachse 4, ein anderer auf der gegenüberliegenden Seite angeordnet werden. Gleiches gilt für den Steg 38. Dies erlaubt eine Brücken-Verschaltung der Dehnungsmessstreifen, welche bekanntermaßen signaltechnisch äußerst vorteilhaft ist.

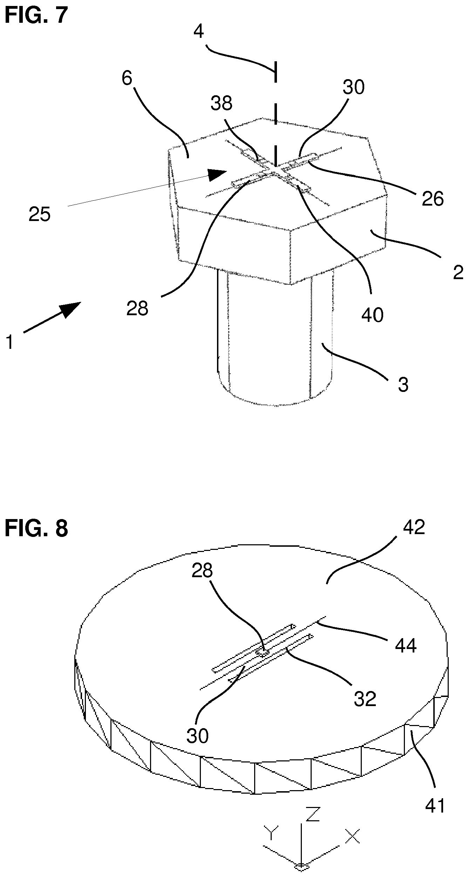

Natürlich kann die kreuzartige Ausbildung der Stege 30 auch durch entsprechende Anordnung der Einschnitte 32 in einem Aufbau mit Montageplatte 26 erreicht werden. Gleichermaßen ist es möglich, wie Fig. 7 zeigt, bereits die Montageplatte 26 kreuzförmig auszugestalten und so die Stege 30, 38 bereitzustellen, auf denen dann die Dehnungsmesssensoren 28 und 40 angeordnet werden können. Auch ist es hier möglich, auf jedem Kreuzarm einen DMS anzubringen und diese vier DMS als Vollbrücke zu schalten. Die Anordnung wird anhand Fig. 13 noch näher erläutert.

Die Verwendung einer Messvorrichtung 25 mit eigenständiger Montageplatte 26 erlaubt es, die Messvorrichtung bereits vollständig vorzukonfigurieren. D. h. den Dehnungsmesssensor 28, seine elektrische Versorgung und Kontaktierung sowie auch die Signalübertragung, die beispielsweise per Funk erfolgen kann, können auf der Montageplatte 26 bereits vorbereitet werden.

Die Befestigung der Montageplatte 26 kann durch eine Klebung oder ein Lötverfahren, insbesondere unter Verwendung eines Metalllots 34 (vgl. Fig. 4) erfolgen. Wesentlich für die Befestigung ist, dass sie die im Schraubenkopf 2 vorliegenden Spannungen auf die Montageplatte 26 überträgt. Gleiches gilt für den Fall, dass der Dehnungsmesssensor 28 auf eine entsprechend gestaltete Oberseite 6 des Schraubenkopfs 2 direkt aufgebracht wird. Sind die Längsschnitte 32 als Durchtrennungsschnitte ausgeführt, ist darauf zu achten, dass ein Metalllot die Längsschnitte nicht vollständig auffüllt. Durch geeignete Lötparameter und Breite der Längsschnitte 32 ist dies einfach sicherzustellen. Verwendet man für die Montageplatte 26 Federstahl oder eine kupferhaltige Metallverbindung, ist das Verwenden eines Metalllotes besonders einfach. Generell kommen für die Befestigung des Dehnungsmesssensors 28 auf dem Steg 30 Lötverfahren, Glasfritten oder Klebungen in Frage.

Die Steghöhe H ist so gewählt, dass die gewünscht Anisotropie, also Unempfindlichkeit auf Querspannungen erreicht ist. Ein Wert von 100 µm genügt in der Regel. Besonders bevorzugt ist ein Wert von 100 bis 500 µm, ganz besonders bevorzugt ist von 200 bis 300 µm. Im Fall eines Durchtrennungsschnitts ist die Steghöhe H automatisch durch die Dicke der Montageplatte 26 gegeben. Gleiches gilt für die Bauweise der Fig. 7. Auch hier liegt die Höhe der kreuzförmigen Montageplatte 26 die Steghöhe H fest. Gleiches gilt für die Stegbreite B, die sich an der Breite herkömmlicher Dehnungsmesssensor 28 orientiert und im Bereich nicht über 2 mm liegen kann. Die Länge beträgt bevorzugt mind. 2x, 5x, 10x oder 20x der Breite und liegt weiter bevorzugt nicht unter 1 cm.

Zur Verdeutlichung des Prinzips, mit dem die Ausführungsformen Kräfte messen, zeigt Fig. 8 ein scheibenförmiges Element 41, auf dem der Dehnungsmesssensor 28 aufgebracht ist. Das Element 41 hat eine Montagefläche 42 auf der ein Steg 30 durch Einschnitte 32 gebildet ist. Auf dem Steg 30 ist ein Dehnungsmesssensor 28 befestigt. Der Steg 30 erstreckt sich längs einer Längsrichtung 44, hier als x-Richtung bezeichnet. Das entsprechende Koordinatensystem ist in Fig. 8 eingetragen und sieht vor, dass die z-Richtung senkrecht zu einer Ebene steht, entlang der sich der Steg 30 erstreckt. Die y-Richtung steht senkrecht zur Längserstreckung des Stegs 30, so dass x und y die Ebene der Montagefläche 42 aufspannen, in der sich der Steg 30 erstreckt.

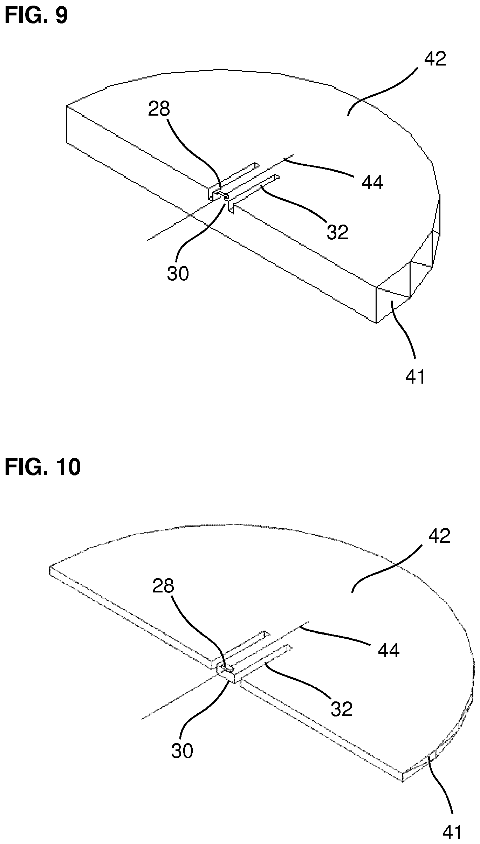

Fig. 9 zeigt eine Schnittdarstellung, die gut erkennen lässt, dass der Steg 30 durch Einschnitte 32 gebildet ist, die sich längs der x-Richtung erstrecken. Die Orientierung des Elementes 41 in Fig. 9 entspricht dem der Fig. 8.

Fig. 10 zeigt eine Abwandlung dahingehend, dass der Steg 30 durch Durchschnitte abgegrenzt ist, die ein dünnes Element 43 durchtrennen. Ob Einschnitte oder Durchschnitte verwendet werden, ist frei wählbar und kann applikationsabhängig bestimmt werden.

Fig. 11 zeigt die vom Si-Dehnungsmesssensor 28 erfassten mechanischen Spannungen, exemplarisch in der Einheit MPa auf der Ordinate, gegenüber einer Position auf dem Steg 30. Kurve 45 zeigt die Spannung längs der y-Richtung, die für eine Ausführungsform ohne Einschnitte bzw. Durchschnitte 32 gegeben wären. Kurve 46 zeigt die entsprechenden Spannungen in x-Richtung. Wie zu sehen ist, sind die Spannungen kaum unterscheidbar. Dies liegt daran, dass herkömmliche Dehnungsmesssensoren 28 weitgehend räumlich isotrop sind, was die Empfindlichkeit auf Spannungen angeht. Kurve 48 zeigt die Spannung in y-Richtung für die

Ausführungsform der Fig. 8 bzw. 10. Kurve 50 zeigt die Spannung in x-Richtung. Die Koeffizientenachsen der DMS im Dehnungsmesssensor 28 erstrecken sich alle parallel oder rechtswinklig zur Längsrichtung 44 des Steges 30. Wie zu erkennen ist, können die Spannungen deutlich unterschieden werden, da bei einer Positionierung des Dehnungsmesssensors 28 zwischen den Orten "2" und "4", die auf der Abszisse in Fig. 11 aufgetragen sind, die Spannung in y-Richtung deutlich geringer ist, als in x-Richtung. Der Dehnungsmesssensor 28 misst damit eindeutig die Spannung in x-Richtung und hat so gut wie keine Querempfindlichkeit auf Spannungen in der y-Richtung.

Die Verwendung des freigestellten, länglichen Stegs 30, beispielsweise durch Einschnitte oder Durchschnitte 32, erlaubt somit die an und für sich Dehnungsmesssensor innewohnende Isotropie aufzuheben und eine klare Vorzugsrichtung für die Messung zu erzielen. Der auf dem Steg 30 befestigte Dehnungsmesssensor 28 misst nur entlang einer Vorzugsrichtung, nämlich der Richtung 44, welche durch die Längserstreckung der Stegfreistellung erreicht ist. In den Fig. 8-11 ist das rein beispielhalber die x-Richtung.

Eine Montagefläche 42, wie in Fig. 8, 9 bzw. 10 gezeigt, kann universell vorgesehen werden. Es ist möglich, sie an einem bestehenden Maschinenelement oder mechanischen Bauelement bereitzustellen. Gleichermaßen ist es möglich, ein entsprechend ausgestaltetes Bauelement, das die Montagefläche 42 bereitstellt, nachträglich anzubringen, um einem bereits verbauten Bauteil mechanische Spannungen in gewünschter Richtung zu messen. Die Richtung, in der die mechanischen Spannungen gemessen werden, ist durch die Längsrichtung 44 des Stegs 30 definiert. Die Bezeichnung "Element" ist zudem nur beispielhaft zu verstehen. Es kann sich um einen beliebigen Abschnitt in einem Bauteil oder einer Struktur handeln, für das die Betriebskraft gemessen werden soll, die sich im Wesentlichen (aber nicht notwendigerweise ausschließlich) entlang der z-Richtung erstreckt. Insbesondere kann die Montagefläche 42 sich im Inneren eines Bauteils befinden, das eine Kammer aufweist, die die Montagefläche 42 bereitstellt. Die Kammer kann insbesondere in einem Maschinenelement vorgesehen sein, das belastet ist und für das die Kraft gemessen werden soll. Eine Mutter, eine Unterlegscheibe oder eine Schraube wären Beispiele hierfür.

Fig. 12A-12B zeigen unterschiedliche Ausgestaltungen des Dehnungsmesssensors mit verschiedenen Anzahlen bzw. Anordnungen von Dehnungsmessstreifen 54a-d. In allen Ausführungsformen ist der Dehnungsmesssensor 28 als Chip 52 ausgebildet, auf dem Si-Dehnungsmessstreifen ausgebildet sind. Die Stegbreite beträgt das Doppelte der Chipbreite; die Steghöhe ist mind. das 0,2-fache der Chipbreite. Die Verwendung eines Chips 52 ist jedoch optional und die Anordnungen der Dehnungsmessstreifen 54a-d in den Fig. 12A-12B sind gleichermaßen auch mit individuellen Dehnungsmessstreifen möglich. In der Ausführungsform der Fig. 12A umfasst der Dehnungsmesssensor 28 vier Dehnungsmessstreifen 54a-d. Die großen Doppelpfeile der Dehnungsmessstreifen 54a, c zeigen, wie ihre Längsachse liegt. Die dünnen Pfeile der Dehnungsmessstreifen 54b, d zeigen die Richtung der Querachse, und die Querstriche veranschaulichen, dass sich die Längsachsen der DMS 54b, d längs der Querstriche erstrecken. Die DMS reagieren aufgrund der ihnen innewohnenden Empfindlichkeit entlang der Querachse ebenfalls auf Dehnungen, jedoch mit invertiertem Signalvorzeichen gegenüber Dehnungen längs der Längsachse. Die Dehnungsmessstreifen 54a-d sind in einer Vollbrücke verschaltet, wie dies im Stand der Technik bekannt ist. Auf diese Weise addieren sich vorteilhafterweise die Signale bei einer Dehnung sowohl längs der Richtung der eingezeichneten Pfeile als auch quer dazu. Der Dehnungsmesssensor 28 ist damit weitgehend isotrop empfindlich und erzeugt ein Signal bei Dehnungen entlang der Längsrichtung der Pfeile als auch bei Dehnungen, die genau rechtwinklig dazu liegen. Der Dehnungsmesssensor 28 wird auf dem Steg 30 so angeordnet, dass die Koordinatenachsen der Dehnungsmessstreifen 54a-d parallel zur Längsrichtung des Stegs 30 liegen. Dies wird dadurch erreicht, dass der Dehnungsmesssensor 28 entweder so angeordnet wird, dass die Doppelpfeile gemäß Fig. 12A sich parallel zur Längsrichtung erstrecken oder genau rechtwinklig dazu liegen. Auch in letzterem Fall liegt für jeden Dehnungsmessstreifen eine Koeffizientenachse parallel zur Längsrichtung des Steges, allerdings wären dann die Dehnungsmessstreifen 54b, d mit ihrer Längsachse parallel zur Längsrichtung ausgerichtet und die Dehnungsmessstreifen 54a, c mit ihrer Querachse. Die Verhältnisse wären also zur Darstellung der Fig. 12A invertiert, was die Längs- und Querachsen angeht. In beiden Varianten sorgt der Steg 30 dafür, dass eine mechanische Dehnung nur in Längsrichtung erfolgt.

Fig. 12B zeigt eine Variante, bei der im Dehnungsmesssensor 28, der exemplarisch wieder als Chip 52 ausgebildet ist, zwei DMS 54a, b als Halbbrücke geschaltet sind. Dies ist vom Aufbau einfacher, signaltechnisch aber nicht so günstig, wie die Vollbrücke der Fig. 12A. Ansonsten gilt das für den Aufbau der Fig. 12A Gesagte sinngemäß.

Fig. 13 zeigt die Ausgestaltung mit Dehnungsmessstreifen 54a-d, die einen Dehnungsmesssensor 28 bilden, auf einer kreuzförmigen Stegstruktur mit einem Steg 30 und einem rechtwinklig dazu liegenden weitem Steg 38. Die Stege kreuzen sich hier; dies ist aber nicht zwingend erforderlich. Analog zum Aufbau der Fig. 12A liegen zwei Dehnungsmessstreifen 54a, c mit ihren Längsachsen längs der Längsrichtung des einen Steges (hier des Steges 30) und die anderen zwei Dehnungsmessstreifen 54b, d mit ihren Querachsen längs der Stegrichtung des anderen Steges (hier des Steges 38). Die vier Dehnungsmessstreifen 54a-d sind wiederum in einer Vollbrücke verschaltet, so dass sich ein erhöhtes Signal ergibt, allerdings ohne Auflösung der Richtung.

Die Stege mit gekreuzten Längsrichtungen erlauben es in zwei orthogonalen Richtungen zu messen und so einen Kraftvektor zu ermitteln, der eine Komponente in z-Richtung hat.

## Patentansprüche

1. Mechanisches Bauelement, insbesondere Maschinenelement (2), an dem zur Messung einer Betriebskraft auf einer Montagefläche (6, 42) mindestens zwei längserstreckte Dehnungsmesssensoren (28, 40) angebracht sind und auf der Montagefläche (6, 42) mindestens ein entlang seiner Längsseiten freigestellter, länglicher Steg (30) angeordnet ist, der sich parallel zu einer Ebene, in der die Montagefläche (6,42) liegt, erstreckt,
**dadurch gekennzeichnet, dass**
- die mindestens zwei Dehnungsmesssensoren (28, 40) zu einer Brücke verschaltet sind und jeweils in Form eines Si-Dehnungsmessstreifens (54a-d) ausgebildet sind, der eine erste Piezokoeffizientenachse und eine im Wesentlichen senkrecht dazu stehende, zweite Piezokoeffizientenachse aufweist,
- mehrere längliche Stege (30, 38) an der Montagefläche (6) angeordnet sind, die sich in unterschiedliche Längsrichtungen erstrecken, wobei mit jedem Steg (30, 38) einer der Dehnungsmesssensoren (28, 40) fest verbunden ist, und
- jeder der Dehnungsmesssensoren (28, 40) so zum jeweiligen Steg (30, 38), mit dem er verbunden ist, ausgerichtet ist, dass
-- für den einen der Dehnungsmesssensoren (28) die erste Piezokoeffizientenachse entlang der Längsseiten des jeweiligen Steges (30) und die zweite Piezokoeffizientenachse quer dazu verläuft und
-- für den anderen der Dehnungsmesssensoren (40) die zweite Piezokoeffizientenachse entlang der Längsseiten des jeweiligen Steges (38) und die erste Piezokoeffizientenachse quer dazu verläuft.

2. Mechanisches Bauelement nach Anspruch 1, **dadurch gekennzeichnet, dass** vier zu einer Vollbrücke verschaltete Dehnungsmessstreifen (54a-d) vorgesehen sind, die erste Piezokoeffizientenachse eine Piezokoeffizientenlängsachse und zweite Piezokoeffizientenachse eine Piezokoeffizientenquerachse ist, und dass zwei der Dehnungsmessstreifen (54a-d) mit ihrer Piezokoeffizientenlängsachse parallel zu den Längsseiten des jeweiligen Steges (30, 38) und die anderen zwei der Si-Dehnungsmessstreifen (54a-d) mit ihrer Piezokoeffizientenquerachse parallel zu den Längsseiten des jeweiligen Steges (30, 38) liegen.

3. Mechanisches Bauelement nach Anspruch 1 oder 2, **dadurch gekennzeichnet, dass** auf der Montagefläche (6) eine Montageplatte (4) angebracht ist, welche die Stege (30, 38) bildet oder aufweist.

4. Mechanisches Bauelement nach Anspruch 3, **dadurch gekennzeichnet, dass** die Dehnungsmesssensoren (28, 40) mit der Montageplatte (4) verlötet ist und die Montageplatte (4) auf die Oberseite (6) eines Schraubenkopfs (2) aufgeklebt oder -gelötet ist.

5. Mechanisches Bauelement nach einem der Ansprüche 3 oder 4, **dadurch gekennzeichnet, dass** die Montageplatte (4) ein Material aufweist, das an das Material der Montagefläche hinsichtlich der mechanischen Elastizitäts- und Festigkeitseigenschaften angepasst ist, insbesondere Federstahl, eine Kupferlegierung oder Keramik ist.

6. Mechanisches Bauelement nach einem der obigen Ansprüche, **dadurch gekennzeichnet, dass** die Stege (30, 38) jeweils durch Einschnitte (8) oder Längsschlitze gebildet sind, die in die Montagefläche (6, 42) bzw. die Montageplatte (4) eingebracht sind, oder, dass die Stege (30, 38) jeweils als integraler Vorsprung ausgebildet sind, der an der Montagefläche (6) vorsteht.

7. Mechanisches Bauelement nach einem der obigen Ansprüche, **dadurch gekennzeichnet, dass** sich die Stege (30, 38) kreuzen.

8. Mechanisches Bauelement nach Anspruch 7, **dadurch gekennzeichnet, dass** drei Stege (30) angeordnet sind, deren unterschiedlichen Längsrichtungen in einem Winkel von 100-140 Grad zueinander liegen, oder dass zwei Stege (30) an einem Schraubenkopf (2) angeordnet sind, deren unterschiedlichen Längsrichtungen in einem Winkel von 80-100 Grad zueinander liegen.

9. Messvorrichtung zur Messung einer Betriebskraft bei einem mechanischen Bauelement, z.B. einem Maschinenelement, wobei die Messvorrichtung mindestens zwei längserstreckte Dehnungsmesssensoren (28, 40) und mindestens einen entlang seiner Längsseiten freigestellten länglichen Steg (30, 38) aufweist,
**dadurch gekennzeichnet, dass**
- die mindestens zwei Dehnungsmesssensoren (28, 40) zu einer Brücke verschaltet sind und jeweils in Form eines Si-Dehnungsmessstreifens (54a-d) ausgebildet sind, der eine erste Piezokoeffizientenachse und eine im Wesentlichen senkrecht dazu stehende, zweite Piezokoeffizientenachse aufweist
- die Messvorrichtung weiter eine Montageplatte (4) aufweist, die zur festen Verbindung mit einer Montagefläche (6) des mechanischen Bauelements (2) ausgestaltet ist und welche mehrere längliche Stege (30, 38) aufweist, die sich in unterschiedliche Längsrichtungen längs der Montageplatte (4) erstrecken und die jeweils entlang ihrer Längsseiten freigestellt ausgebildet sind, wobei mit jedem Steg (30, 38) einer der Dehnungsmesssensoren (28, 40) fest verbunden ist und
- jeder der Dehnungsmesssensoren (30, 38) so zu dem jeweiligen Steg (30, 38), mit dem er verbunden ist, ausgerichtet ist, dass
-- für den einen der Dehnungsmesssensoren (28) die erste Piezokoeffizientenachse entlang der Längsseiten des Steges (30) und die zweite Piezokoeffizientenachse quer dazu verläuft und
-- für den anderen der Dehnungsmesssensoren (40) die zweite Piezokoeffizientenachse entlang der Längsseiten des jeweiligen Steges (38) und die erste Piezokoeffizientenachse quer dazu verläuft.

10. Messvorrichtung nach Anspruch 9, **dadurch gekennzeichnet, dass** vier zu einer Vollbrücke verschaltete Dehnungsmessstreifen (54a-d) vorgesehen sind, die erste Piezokoeffizientenachse eine Piezokoeffizientenlängsachse und zweite Piezokoeffizientenachse eine Piezokoeffizientenquerachse ist, und dass zwei der Dehnungsmessstreifen (54a-d) mit ihrer Piezokoeffizientenlängsachse parallel zu den Längsseiten des jeweiligen Steges (30, 38) und die anderen zwei der Si-Dehnungsmessstreifen (54a-d) mit ihrer Piezokoeffizientenquerachse parallel zu den Längsseiten des jeweiligen Steges (30, 38) liegen.

11. Messvorrichtung nach Anspruch 9 oder 10, **dadurch gekennzeichnet, dass** die Montageplatte (4) zum Aufkleben oder Auflöten auf die Montagefläche (6) ausgebildet ist, wobei optional die Montageplatte (4) als Material Federstahl oder eine Kupferlegierung aufweist.

12. Messvorrichtung nach einem der Ansprüche 9 bis 11, **dadurch gekennzeichnet**, sich die Stege (30, 38) kreuzen.

13. Verfahren zur Messung einer Betriebskraft bei einem mechanischen Bauelement, z.B. einem Maschinenelement, wobei mindestens zwei längserstreckte Dehnungsmesssensoren (28, 40) verwendet werden und an einer Montagefläche (6, 42) des mechanischen Bauelements (2) mindestens ein entlang seiner Längsseiten freigestellter, länglicher Steg (30) vorgesehen wird, der sich auf der oder parallel zu einer Ebene, in der die Montagefläche (6, 42) liegt, erstreckt, **dadurch gekennzeichnet, dass**
- die mindestens zwei Dehnungsmesssensoren (28, 40) zu einer Brücke verschaltet sind und jeweils in Form eines Si-Dehnungsmessstreifens (54a-d) ausgebildet sind, der eine erste Piezokoeffizientenachse und eine im Wesentlichen senkrecht dazu stehende, zweite Piezokoeffizientenachse aufweist,
- mehrere längliche Stege (30, 38) an der Montagefläche (6) angeordnet sind, die sich in unterschiedliche Längsrichtungen erstrecken, wobei mit jedem Steg (30, 38) einer der Dehnungsmesssensoren (28, 40) fest verbunden ist und
- jeder der Dehnungsmesssensoren (30, 38) so zum jeweiligen Steg (30, 38), mit dem er verbunden ist, ausgerichtet wird, dass
-- für den einen der Dehnungsmesssensoren (28) die erste Piezokoeffizientenachse entlang der Längsseiten des jeweiligen Steges (30) und die zweite Piezokoeffizientenachse quer dazu verläuft und
-- für den anderen der Dehnungsmesssensoren (40) die zweite Piezokoeffizientenachse entlang der Längsseiten des jeweiligen Steges (38) und die erste Piezokoeffizientenachse quer dazu verläuft.

14. Verfahren nach Anspruch 13, **dadurch gekennzeichnet, dass** zur Messung an einem bereits verbauten mechanischen Bauelement (2) eine Montageplatte (4) bereitgestellt wird, welche die Stege (30, 38) aufweist, bevorzugt durch in die Montageplatte (4) eingebrachte Längsschlitze (32), und die Montageplatte (4) mit auf den Stegen (30) befestigten Dehnungsmesssensoren (28, 40) fest mit dem mechanischen Bauelement (2) verbunden wird.

15. Verfahren nach Anspruch 13 oder 14, **dadurch gekennzeichnet, dass** die Richtung der Betriebskraft ermittelt wird.

## Claims

1. Mechanical component, in particular machine element (2), on which at least two longitudinally extending strain measuring sensors (28, 40) are attached for measuring an operating force on a mounting surface (6, 42) and on the mounting surface (6, 42) there is arranged at least one elongated web (30), which is detached along its longitudinal sides and extends parallel to a plane in which the mounting surface (6, 42) lies,
**characterized in that**
- the at least two strain measuring sensors (28, 40) are connected to form a bridge and respectively take the form of an Si strain gauge (54a-d), which has a first piezoelectric coefficient axis and, substantially perpendicular thereto, a second piezoelectric coefficient axis,
- a number of elongated webs (30, 38), which extend in different longitudinal directions, are arranged on the mounting surface (6), one of the strain measuring sensors (28, 40) being securely connected to each web (30, 38), and
- each of the strain measuring sensors (28, 40) is aligned with the respective web (30, 38), to which it is connected, such that
-- for one of the strain measuring sensors (28), the first piezoelectric coefficient axis runs along the longitudinal sides of the respective web (30) and the second piezoelectric coefficient axis runs transversely thereto and
-- for the other of the strain measuring sensors (40), the second piezoelectric coefficient axis runs along the longitudinal sides of the respective web (38) and the first piezoelectric coefficient axis runs transversely thereto.

2. Mechanical component according to Claim 1, **characterized in that** four strain gauges (54a-d), connected to form a full bridge, are provided, the first piezoelectric coefficient axis is a longitudinal piezoelectric coefficient axis and the second piezoelectric coefficient axis is a transverse piezoelectric coefficient axis, and **in that** two of the strain gauges (54a-d) lie with their longitudinal piezoelectric coefficient axis parallel to the longitudinal sides of the respective web (30, 38) and the other two of the Si strain gauges (54a-d) lie with their transverse piezoelectric coefficient axis parallel to the longitudinal sides of the respective web (30, 38).

3. Mechanical component according to Claim 1 or 2, **characterized in that** a mounting plate (4), which forms or has the webs (30, 38), is attached on the mounting surface (6).

4. Mechanical component according to Claim 3, **characterized in that** the strain measuring sensors (28, 40) are soldered to the mounting plate (4) and the mounting plate (4) is adhesively attached or soldered to the upper side (6) of a screw head (2).

5. Mechanical component according to either of Claims 3 and 4, **characterized in that** the mounting plate (4) comprises a material which is adapted to the material of the mounting surface with regard to the mechanical elasticity and strength properties, in particular is spring steel, a copper alloy or ceramic.

6. Mechanical component according to one of the above claims, **characterized in that** the webs (30, 38) are respectively formed by incisions (8) or longitudinal slits that are incorporated in the mounting surface (6, 42) or the mounting plate (4), or **in that** the webs (30, 38) are respectively formed as an integral projection, which projects from the mounting surface (6).

7. Mechanical component according to one of the above claims, **characterized in that** the webs (30, 38) cross one another.

8. Mechanical component according to Claim 7, **characterized in that** three webs (30), the different longitudinal directions of which lie at an angle of 100-140 degrees to one another, are arranged or **in that** two webs (30), the different longitudinal directions of which lie at an angle of 80-100 degrees to one another, are arranged on a screw head (2).

9. Measuring device for measuring an operating force in the case of a mechanical component, for example a machine element, the measuring device having at least two longitudinally extending strain measuring sensors (28, 40) and at least one elongated web (30, 38), which is detached along its longitudinal sides,
**characterized in that**
- the at least two strain measuring sensors (28, 40) are connected to form a bridge and respectively take the form of an Si strain gauge (54a-d), which has a first piezoelectric coefficient axis and, substantially perpendicular thereto, a second piezoelectric coefficient axis,
- the measuring device also has a mounting plate (4), which is designed for secure connection to a mounting surface (6) of the mechanical component (2) and which has a number of elongated webs (30, 38), which extend in different longitudinal directions along the mounting plate (4) and are respectively formed as detached along their longitudinal sides, one of the strain measuring sensors (28, 40) being securely connected to each web (30, 38), and
- each of the strain measuring sensors (30, 38) being aligned with the respective web (30, 38), to which it is connected, such that
-- for one of the strain measuring sensors (28), the first piezoelectric coefficient axis runs along the longitudinal sides of the web (30) and the second piezoelectric coefficient axis runs transversely thereto and
-- for the other of the strain measuring sensors (40), the second piezoelectric coefficient axis runs along the longitudinal sides of the respective web (38) and the first piezoelectric coefficient axis runs transversely thereto.

10. Measuring device according to Claim 9, **characterized in that** four strain gauges (54a-d), connected to form a full bridge, are provided, the first piezoelectric coefficient axis is a longitudinal piezoelectric coefficient axis and the second piezoelectric coefficient axis is a transverse piezoelectric coefficient axis, and **in that** two of the strain gauges (54a-d) lie with their longitudinal piezoelectric coefficient axis parallel to the longitudinal sides of the respective web (30, 38) and the other two of the Si strain gauges (54a-d) lie with their transverse piezoelectric coefficient axis parallel to the longitudinal sides of the respective web (30, 38).

11. Measuring device according to Claim 9 or 10, **characterized in that** the mounting plate (4) is formed for adhesively attaching or soldering onto the mounting surface (6), the mounting plate (4) optionally comprising spring steel or a copper alloy as the material.

12. Measuring device according to one of Claims 9 to 11, **characterized in that** the webs (30, 38) cross one another.

13. Method for measuring an operating force in the case of a mechanical component, for example a machine element, at least two longitudinally extending strain measuring sensors (28, 40) being used and at least one elongated web (30), which is detached along its longitudinal sides and extends on the or parallel to a plane in which the mounting surface (6, 42) lies, being provided on a mounting surface (6, 42) of the mechanical component (2), **characterized in that**
- the at least two strain measuring sensors (28, 40) are connected to form a bridge and respectively take the form of an Si strain gauge (54a-d), which has a first piezoelectric coefficient axis and, substantially perpendicular thereto, a second piezoelectric coefficient axis,
- a number of elongated webs (30, 38), which extend in different longitudinal directions, are arranged on the mounting surface (6), one of the strain measuring sensors (28, 40) being securely connected to each web (30, 38), and
- each of the strain measuring sensors (30, 38) is aligned with the respective web (30, 38), to which it is connected, such that
-- for one of the strain measuring sensors (28), the first piezoelectric coefficient axis runs along the longitudinal sides of the respective web (30) and the second piezoelectric coefficient axis runs transversely thereto and
-- for the other of the strain measuring sensors (40), the second piezoelectric coefficient axis runs along the longitudinal sides of the respective web (38) and the first piezoelectric coefficient axis runs transversely thereto.

14. Method according to Claim 13, **characterized in that** a mounting plate (4), which has the webs (30, 38), preferably as a result of longitudinal slits (32) incorporated in the mounting plate (4), is provided for measuring on an already installed mechanical component (2), and the mounting plate (4) with strain measuring sensors (28, 40) fastened on the webs (30) is securely connected to the mechanical component (2).

15. Method according to Claim 13 or 14, **characterized in that** the direction of the operating force is determined.

## Revendications

1. Composant mécanique, en particulier composant de machine (2), sur lequel au moins deux capteurs de mesure d'allongement allongés (28, 40) sont fixés pour mesurer une force motrice sur une surface de montage (6, 42) et au moins une nervure allongée (30), exposée le long de ses côtés longitudinaux, est disposée sur la surface de montage (6, 42), laquelle nervure s'étend parallèlement à un plan dans lequel se trouve la surface de montage (6, 42),
**caractérisé en ce que**
- les au moins deux capteurs de mesure d'allongement (28, 40) sont montés en pont et sont chacun conçus sous la forme d'une jauge d'allongement en Si (54a-d) qui comporte un premier axe à coefficient piézo et un deuxième axe à coefficient piézo qui est sensiblement perpendiculaire à celui-ci,
- une pluralité de nervures allongées (30, 38) sont disposées sur la surface de montage (6), lesquelles s'étendent dans différentes directions longitudinales, l'un des capteurs de mesure d'allongement (28, 40) étant relié de manière fixe à chaque nervure (30, 38), et
- chacun des capteurs de mesure d'allongement (28, 40) est orienté par rapport à la nervure respective (30, 38) à laquelle il est relié de sorte que
-- pour l'un des capteurs de mesure d'allongement (28), le premier axe à coefficient piézo s'étend le long des côtés longitudinaux de la nervure respective (30) et le deuxième axe à coefficient piézo s'étend transversalement à ceux-ci, et
-- pour l'autre des capteurs de mesure d'allongement (40), le deuxième axe à coefficient piézo s'étend le long des côtés longitudinaux de la nervure respective (38) et le premier axe à coefficient piézo s'étend transversalement à ceux-ci.

2. Composant mécanique selon la revendication 1, **caractérisé en ce que** quatre jauges d'allongement (54a-d) montées en pont complet sont prévues, le premier axe à coefficient piézo est un axe longitudinal à coefficient piézo et le deuxième axe à coefficient piézo est un axe transversal à coefficient piézo, et **en ce que** deux des jauges d'allongement (54a-d) ont leur axe longitudinal à coefficient piézo qui est parallèle aux côtés longitudinaux de la nervure respective (30, 38) et les deux autres jauges d'allongement en Si (54a-d) ont leur axe transversal à coefficient piézo qui est parallèle aux côtés longitudinaux de la nervure respective (30, 38).

3. Composant mécanique selon la revendication 1 ou 2, **caractérisé en ce qu'**une plaque de montage (4), qui forme ou comporte les nervures (30, 38), est fixée sur la surface de montage (6).

4. Composant mécanique selon la revendication 3, **caractérisé en ce que** les capteurs de mesure d'allongement (28, 40) sont soudés à la plaque de montage (4) et la plaque de montage (4) est collée ou soudée au côté supérieur (6) d'une vis de tête (2).

5. Composant mécanique selon l'une des revendications 3 et 4, **caractérisé en ce que** la plaque de montage (4) comporte un matériau qui est adapté au matériau de la surface de montage en termes de propriétés de résistance et d'élasticité mécanique, notamment un acier à ressort, un alliage de cuivre ou une céramique.

6. Composant mécanique selon l'une des revendications précédentes, **caractérisé en ce que** les nervures (30, 38) sont formées chacune par des incisions (8) ou des fentes longitudinales qui sont ménagées dans la surface de montage (6, 42) ou la plaque de montage (4) ou **en ce que** les nervures (30, 38) sont chacune conçues comme une saillie intégrale qui dépasse de la surface de montage (6).

7. Composant mécanique selon l'une des revendications précédentes, **caractérisé en ce que** les nervures (30, 38) se croisent.

8. Composant mécanique selon la revendication 7, **caractérisé en ce que** trois nervures (30), dont les différentes directions longitudinales font un angle de 100 à 140 degrés entre elles, sont disposées ou **en ce que** deux nervures (30), dont les différentes directions longitudinales forment un angle de 80 à 100 degrés entre elles, sont disposées sur une tête de vis (2).

9. Dispositif de mesure destiné à mesurer une force motrice dans un composant mécanique, par exemple un composant de machine, le dispositif de mesure comportant au moins deux capteurs de mesure d'allongement allongés (28, 40) et au moins une nervure allongée (30, 38) exposée le long de ses côtés longitudinaux,
**caractérisé en ce que**
- les au moins deux capteurs de mesure d'allongement (28, 40) sont montés en pont et sont chacun conçus sous la forme d'une jauge d'allongement en Si (54a-d) qui comporte un premier axe à coefficient piézo et un deuxième axe à coefficient piézo qui est sensiblement perpendiculaire à celui-ci,
- le dispositif de mesure comporte en outre une plaque de montage (4) qui est conçue pour être reliée de manière fixe à une surface de montage (6) du composant mécanique (2) et qui comporte plusieurs nervures allongées (30, 38) qui s'étendent dans différentes directions longitudinales le long de la plaque de montage (4) et qui sont chacune conçues pour être exposées le long de leurs côtés longitudinaux, l'un des capteurs de mesure d'allongement (28, 40) étant relié de manière fixe à chaque nervure (30, 38), et
- chacun des capteurs de mesure d'allongement (30, 38) est orienté par rapport à la nervure respective (30, 38) à laquelle il est relié de sorte que
-- pour l'un des capteurs de mesure d'allongement (28), le premier axe à coefficient piézo s'étende le long des côtés longitudinaux de la nervure (30) et le deuxième axe à coefficient piézo s'étende transversalement à ceux-ci, et
-- pour l'autre des capteurs de mesure d'allongement (40), le deuxième axe à coefficient piézo s'étende le long des côtés longitudinaux de la nervure respective (38) et le premier axe à coefficient piézo s'étende transversalement à ceux-ci.

10. Dispositif de mesure selon la revendication 9, **caractérisé en ce que** quatre jauges d'allongement (54a-d) montées en pont complet sont prévues, le premier axe à coefficient piézo est un axe longitudinal à coefficient piézo et le deuxième axe à coefficient piézo est un axe transversal à coefficient piézo, et **en ce que** deux des jauges d'allongement (54a-d) ont leur axe longitudinal à coefficient piézo qui est parallèle aux côtés longitudinaux de la nervure respective (30, 38) et les deux autres jauges d'allongement en Si (54a-d) ont leur axe transversal à coefficient piézo qui est parallèle aux côtés longitudinaux de la nervure respective (30, 38).

11. Dispositif de mesure selon la revendication 9 ou 10, **caractérisé en ce que** la plaque de montage (4) est destinée à être collée ou soudée sur la surface de montage (6), la plaque de montage (4) comportant éventuellement comme matériau un acier à ressort ou un alliage de cuivre.

12. Dispositif de mesure selon l'une des revendications 9 à 11, **caractérisé en ce que** les nervures (30, 38) se croisent.

13. Procédé de mesure d'une force motrice dans un composant mécanique, par exemple un composant de machine, au moins deux capteurs de mesure d'allongement allongés (28, 40) étant utilisés et au moins une nervure allongée (30), exposée le long de ses côtés longitudinaux et s'étendant dans, ou parallèlement à, un plan dans lequel se trouve la surface de montage (6, 42), étant prévue sur une surface de montage (6, 42) du composant mécanique (2),
**caractérisé en ce que**
- les au moins deux capteurs de mesure d'allongement (28, 40) sont montés en pont et sont chacun conçus sous la forme d'une jauge d'allongement en Si (54a-d) qui comporte un premier axe à coefficient piézo et un deuxième axe à coefficient piézo qui est sensiblement perpendiculaire à celui-ci,
- une pluralité de nervures allongées (30, 38) sont disposées sur la surface de montage (6), lesquelles s'étendent dans différentes directions longitudinales, l'un des capteurs de mesure d'allongement (28, 40) étant relié de manière fixe à chaque nervure (30, 38) et
- chacun des capteurs de mesure d'allongement (30, 38) est orienté par rapport à la nervure respective (30, 38) à laquelle il est relié de sorte que
-- pour l'un des capteurs de mesure d'allongement (28), le premier axe à coefficient piézo s'étende le long des côtés longitudinaux de la nervure respective (30) et le deuxième axe à coefficient piézo s'étende transversalement à ceux-ci, et
-- pour l'autre des capteurs de mesure d'allongement (40), le deuxième axe à coefficient piézo s'étende le long des côtés longitudinaux de la nervure respective (38) et le premier axe à coefficient piézo s'étende transversalement à ceux-ci.

14. Procédé selon la revendication 13, **caractérisé en ce que**, pour effectuer la mesure sur un composant mécanique déjà installé (2), une plaque de montage (4) est prévue qui comporte les nervures (30, 38), de préférence des fentes longitudinales (32) ménagées dans la plaque de montage (4), et la plaque de montage (4) pourvue de capteurs de mesure d'allongement (28, 40) fixés sur les nervures (30) est reliée de manière fixe au composant mécanique (2).

15. Procédé selon la revendication 13 ou 14, **caractérisé en ce que** la direction de la force motrice est déterminée.
